# EUROPEAN PATENT APPLICATION

(11) **EP 2 405 099 A2**
(43) Date of publication of application: **11.01.2012**
(21) Application number: 10176711.9
(22) Date of filing: 14.09.2010
(51) Int. Cl.: E21F 1/08

(54) **Ventilation system for tunnel engineering**

(30) Priority: 06.07.2010 TW 099122234
(71) Applicant: Chung-Hsin Electric and Machinery Manufacturing Corp., Taipei County (TW)
(72) Inventor: Sun, Yu-Ming, 33383, Taoyuan County (TW); Wu, Chi-Bin, 33383, Taoyuan County (TW)
(74) Representative: Lang, Christian

(57) **Abstract**

The present invention discloses a ventilation system (100, 100') for tunnel engineering. The ventilation system (100, 100) is for use in a tunnel (101) having at least one first shaft (102) and at least one second shaft (103). The ventilation system (100, 100') includes a heat collecting device (10), a cooling device (30), and at least one piping system (20, 20'). The piping system (20, 20') is connected to the heat collecting device (10) and the cooling device (30). A portion of the piping system (20, 20') coils inside the first and second shafts (102, 103). Increasing the temperature in the first shaft (102) and/or decreasing the temperature in the second shaft (103) introduces ambient air into the tunnel (101) via the first and second shafts (102, 103) by natural convection, thereby decreasing and maintaining the temperature in the tunnel (101) and renewing air therein. The ventilation system (100, 100') advantageously features low power consumption and low manufacturing costs and is fit for use in long-distance tunnel engineering that requires multi-point installation of the ventilation system.

## Description

### Field of the Invention

The present invention relates to ventilation systems for tunnel engineering, and more particularly, to a ventilation system configured for use in tunnel engineering and operated by a heat-driven cooling mechanism.

### Background of the Invention

Due to its socioeconomic development, the densely-populated Taiwan has an inevitably great demand for electricity. In Taiwan, the dependency upon electricity is most markedly manifested in metropolitan areas and science parks. Hence, elevated high-voltage power cables play an important role in electric power transmission. However, in a city, high-voltage power cables have to work underground in order to let the city look neat and tidy and to prevent the high-voltage power cables from being damaged by an earthquake or typhoon.

In addition to the high costs incurred, underground high-voltage power cables are confronted with problems, such as heat dissipation. Underground high-voltage power cables have to be installed in tunnels. However, tunnels are known to be less ventilated. Furthermore, to a small extent, high-voltage power cables in operation generate heat. The heat accumulated in tunnels that accommodate high-voltage power cables increases with the time of electric power transmission; as a result, the copper cores of underground high-voltage power cables are susceptible to damage, and the efficiency of electric power transmission by underground high-voltage power cables greatly deteriorates. Hence, tunnel temperature has to be kept below 37°C so as to maintain the efficiency of electric power transmission by underground high-voltage power cables.

Poor ventilation of tunnels that accommodate high-voltage power cables not only results in poor heat dissipation, but also causes hypoxia or produces harmful gas. Hence, as a part of preparation for entering the tunnels, maintenance workers have to perform tunnel-bound air renewal operations carefully.

The prior art approaches are usually focused on the aforesaid issues about heat dissipation and air renewal by air conditioning equipment or fans. However, air conditioning equipment and fans cannot serve the aforesaid purposes without substantially consuming electric power, thus failing to meet the power saving requirement. Also, in case of a flood inside a tunnel, electric appliances installed inside the tunnel will be damaged and rendered inoperable. Moreover, the presence of the electric appliances in the tunnel makes it more difficult to carry out repair and maintenance work to the high-voltage power cable system.

Hence, installation of electric appliances, such as air conditioning equipment or fans, inside tunnels that accommodate high-voltage power cables is never a good solution for overcoming the aforesaid drawbacks (i.e., difficulty in heat dissipation and air renewal in tunnel engineering) of underground high-voltage power cables, not to mention that the installed electric appliances consume too much additional electric power.

### Summary of the Invention

The present invention relates to a ventilation system for use in tunnel engineering, wherein ambient air is introduced, by natural convection, into a tunnel to thereby renew air therein or decrease the temperature therein.

The present invention relates to a ventilation system for use in tunnel engineering, wherein the inside of a shaft is heated up to enhance convection therein.

The present invention relates to a ventilation system for use in tunnel engineering, wherein heat collected by a non-electric-heating heat collecting device provides the driving energy which, coupled with an adsorption or absorption cooling device and the heating and cooling spiral pipes disposed in the shafts, gives the ventilation system advantageous features, such as the absence of moving parts, ease of use, low noise, low power consumption, long service life, and low manufacturing costs, such that the ventilation system is fit for use in long-distance tunnel engineering that requires multi-point installation of the ventilation system.

In order to achieve the above and other objectives, the present invention provides a ventilation system for use in tunnel engineering. The ventilation system is applicable to a tunnel having at least one first shaft and at least one second shaft. The ventilation system comprises: a heat collecting device for collecting heat; and at least one piping system each comprising: a first pump connected to the heat collecting device; and a first pipeline communicating with the first pump to form a circuit, wherein a portion of the first pipeline coils inside the first shaft to form a heating spiral pipe inside the first shaft.

In order to achieve the above and other objectives, the present invention further provides a ventilation system for use in tunnel engineering. The ventilation system is applicable to a tunnel having at least one first shaft and at least one second shaft. The ventilation system comprises: a heat collecting device for collecting heat; a cooling device for refrigeration, comprising: a cooler connected to the heat collecting device; and a cooling tower connected to the cooler; and at least one piping system each comprising: a first pump connected to the heat collecting device; a first pipeline communicating with the first pump to form a circuit, wherein a portion of the first pipeline coils inside the first shaft to form a heating spiral pipe inside the first shaft; a second pump connected to the cooler; and a second pipeline communicating with the second pump to form a circuit, wherein a portion of the second pipeline coils inside the second shaft to form a cooling spiral pipe inside the second shaft.

Implementation of the present invention at least involves the following inventive steps:
1. The temperature inside the shafts is raised, so as to achieve the effect of air renewal or heat dissipation by natural convection.
2. The ventilation system in its entirety is free of any moving parts, uses non-electric heat as the required driving energy, features low power consumption, long service life, and low manufacturing costs, and is fit for use in tunnel engineering that requires multi-point installation of the ventilation system.

The features and advantages of the present invention are described in detail in the preferred embodiments of the present invention so as to enable persons skilled in the art to gain insight into the technical disclosure in the present invention and implement the present invention accordingly and readily understand the objectives and advantages of the present invention by making reference to the disclosure contained in the specification, the claims, and the drawings of the present invention.

### Brief Description of the Drawings

Fig. 1 is a schematic view of a ventilation system for use in tunnel engineering in a first embodiment of the present invention;
Fig. 2 is a schematic view of a spiral pipe in an embodiment of the present invention;
Fig. 3 is a schematic view of operation of the ventilation system for use in tunnel engineering in the first embodiment of the present invention;
Fig. 4 is a schematic view of the ventilation system for use in tunnel engineering in a second embodiment of the present invention; and
Figs. 5 and 6 are schematic views of operation of the ventilation system for use in tunnel engineering in the second embodiment of the present invention.

### Detailed Description of the Invention

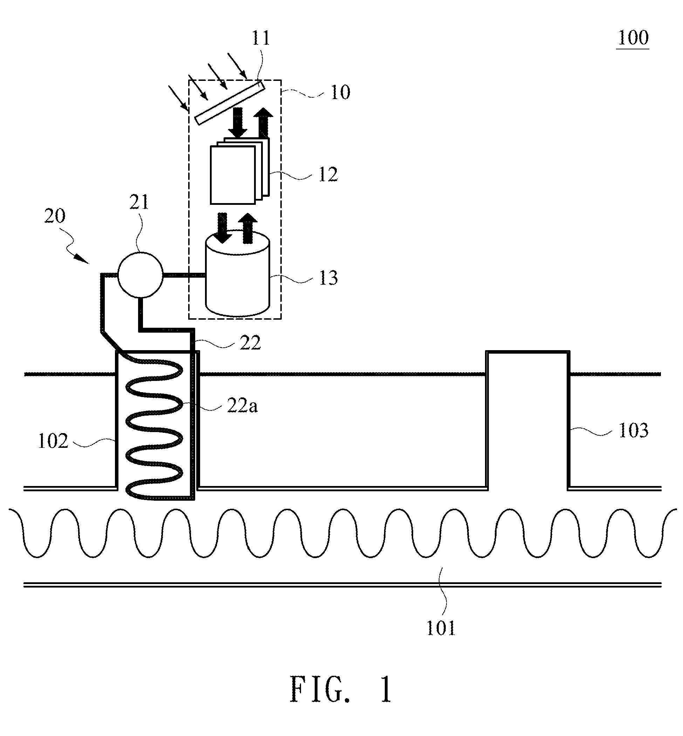

Referring to Fig. 1, in a first embodiment of the present invention, a ventilation system 100 for use in tunnel engineering comprises a heat collecting device 10 and at least one piping system 20.

In this embodiment, the ventilation system 100 is applicable to a tunnel 101 having at least one first shaft 102 and at least one second shaft 103. The heat collecting device 10 collects heat. The heat collecting device 10, coupled with the piping system 20, allows the temperature in the first shaft 102 to rise. As a result, the first shaft 102 manifests a chimney effect. The chimney effect speeds up convection between the air inside and outside the tunnel 101.

The heat collected by the heat collecting device 10 is the major energy source for driving the entirety of the ventilation system 100. The heat thus collected may originate from solar energy, geothermal energy, fuel gas energy and/or waste heat. Any source of heat other than electric heat can be the source of heat collected by the heat collecting device 10.

The heat collecting device 10 comprises a heat collector 11 and a heat exchanger 12. In this embodiment, the heat thus collected originates from solar energy, and the heat collector 11 is a solar heat collecting panel or a solar vacuum heat collecting tube. The heat collector 11 absorbs solar radiation energy. The heat collector 11 is connected to heat exchanger 12 and stores, through the heat exchanger 12, the absorbed thermal energy in the form of a heat transfer medium. In this embodiment, water functions as a heat transfer medium, because water is characterized by high latent heat of evaporation, high stability, and no toxicity.

Each said piping system 20 comprises a first pump 21 and a first pipeline 22. The first pump 21 is connected between the heat collecting device 10 and the first pipeline 22. Water is heated up by the heat collecting device 10. The first pump 21 introduces the hot water into the first pipeline 22. To ensure that the hot water can be steadily introduced into the first pipeline 22, the heat collecting device 10 further comprises a first storage tank 13. The first storage tank 13 stores the hot water produced by the heat collecting device 10. Hence, the first storage tank 13 is configured to function as a heat-storing device and connected between the heat exchanger 12 and the first pump 21.

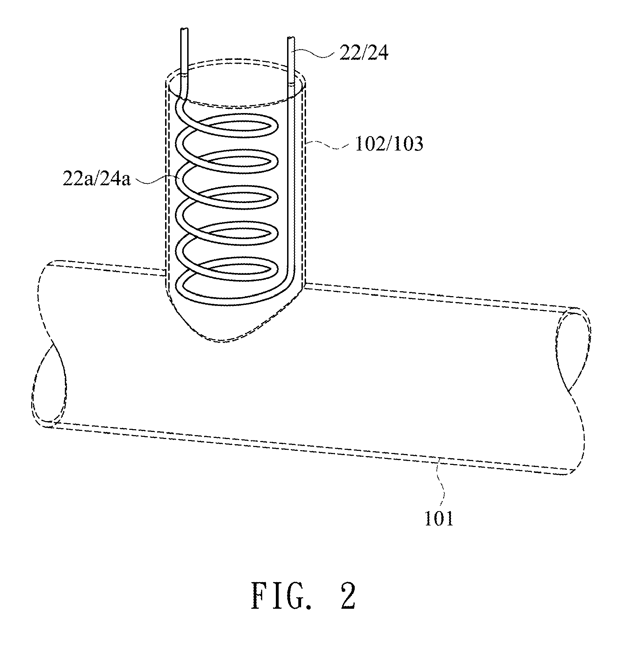

Referring to Fig. 2, a portion of the first pipeline 22 coils inside the first shaft 102 to form a heating spiral pipe 22a inside the first shaft 102. The first pipeline 22 communicates with the first pump 21 to form a circuit (see Fig. 1). The heating spiral pipe 22a is made of metal or non-metal material. The heating spiral pipe 22a is designed in a manner to lift the air inside the first shaft 102, so as to speed up the chimney effect taking place in the first shaft 102. The chimney effect means the enhanced natural convection between ascending hot air and descending cold air inside a vertical ventilation pipe. Hence, the heating spiral pipe 22a speeds up the chimney effect taking place in the first shaft 102, and enables cold air to be introduced into the tunnel 101 from the second shaft 103, thereby achieving ventilation and renewal of air.

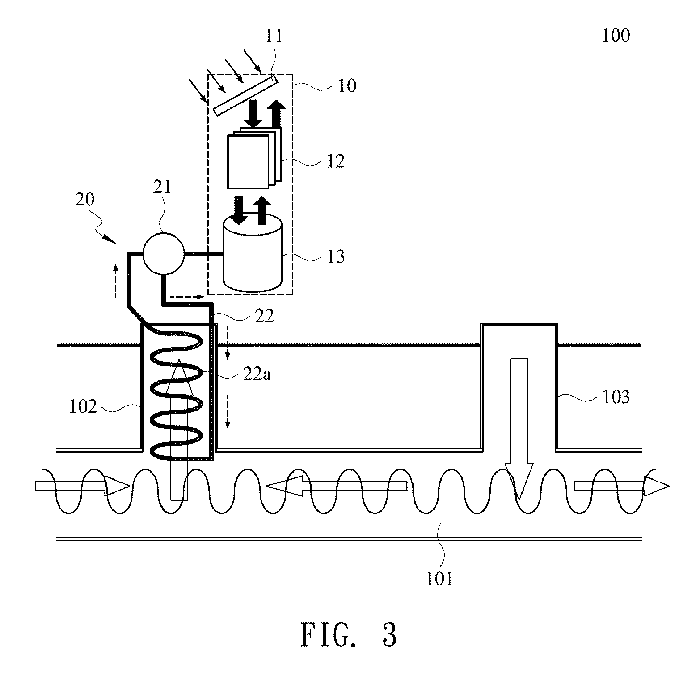

Referring to Fig. 3, the dashed-line arrows indicate the directions in which the hot water in the heating spiral pipe 22a flows, and the white arrows indicate the directions in which gas flows. Due to the hot water introduced into the heating spiral pipe 22a, the temperature of air inside the first shaft 102 rises, and thus the gaseous pressure inside the first shaft 102 rises. As a result, the air inside the first shaft 102 moves upward, and thus the air inside the tunnel 101 is guided out of the tunnel 101. Since the air inside the tunnel 101 is discharged by means of the first shaft 102, pressure inside the tunnel 101 drops. Eventually, ambient air enters the tunnel 101 via the second shaft 103 to thereby finalize a complete gas circulation process.

In the first embodiment, the chimney effect is induced by the heating spiral pipe 22a inside the first shaft 102, such that air is discharged from the first shaft 102 and then fed through the second shaft 103 to thereby achieve ventilation and renewal of air. Furthermore, to ensure efficient utilization of heat collected by the heat collecting device 10, the ventilation system 100 is equipped with a heat-driven cooler for maintaining the temperature in the tunnel 101 efficiently.

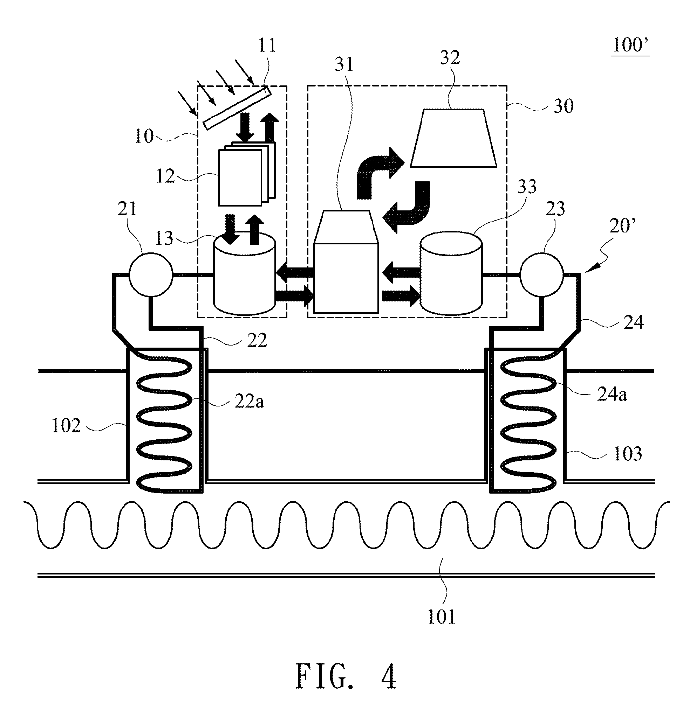

Referring to Fig. 4, there is shown a schematic view of the ventilation system 100' for use in tunnel 101 engineering according to a second embodiment of the present invention. As shown in Fig. 4, the ventilation system 100' comprises a heat collecting device 10, a cooling device 30, and at least one piping system 20'.

The ventilation system 100' in the second embodiment is also applicable to the tunnel 101 having at least one first shaft 102 and at least one second shaft 103. Likewise, the purpose of the heat collecting device 10 is to collect heat. Compared with the first embodiment, the heat thus collected in the second embodiment is more effective in driving the cooling device 30 and enabling the cooling device 30 to produce ice water. The cooling device 30, coupled with the piping system 20' that is more sophisticated than the piping system 20, enhances the efficiency of the natural convection between the first shaft 102 and the second shaft 103, enhances the natural convection between air inside and outside the tunnel 101, and enables air renewal and a decrease in temperature.

The cooling device 30 is configured to produce ice water. The cooling device 30 comprises a cooler 31 and a cooling tower 32. The cooler 31 is a heat-driven cooler, an adsorption type cooler, or an absorption type cooler. The cooler 31 is connected to the heat collecting device 10. The cooler 31 receives heat from the heat collector 11 of the heat collecting device 10. The heat exchanger 12 provides the heat required for the formation of hot water. The hot water thus formed serves as a hot water source for driving the cooler 31. The cooling tower 32 is connected to the cooler 31 and serves as a cold water source for the cooler 31.

Working in conjunction with the heat collecting device 10 and the cooling device 30, the piping system 20' comprises a first pump 21, a first pipeline 22, a second pump 23, and a second pipeline 24. The first pump 21 is connected to the first storage tank 13 of the heat collecting device 10 or directly connected to the heat exchanger 12. The second pump 23 is connected to the cooler 31 of the cooling device 30. The first pump 21 and the second pump 23 introduce hot water and ice water into the first pipeline 22 and the second pipeline 24, respectively. Likewise, to provide a stable ice water source, the cooling device 30 further comprises a second storage tank 33 connected between the cooler 31 of the cooling device 30 and the second pump 23. Ice water produced by the cooling device 30 is stored in the second storage tank 33. Hence, the second storage tank 33 functions as a cold air-storing device.

Referring to Fig. 2 and Fig. 4, a portion of the first pipeline 22 and a portion of the second pipeline 24 coil inside the first and second shafts 102, 103 to form the heating spiral pipe 22a and a cooling spiral pipe 24a inside the first and second shafts 102, 103, respectively, and the second pipeline 24 communicates with the second pump 23 to form a circuit. The cooling spiral pipe 24a is made of metal or non-metal material.

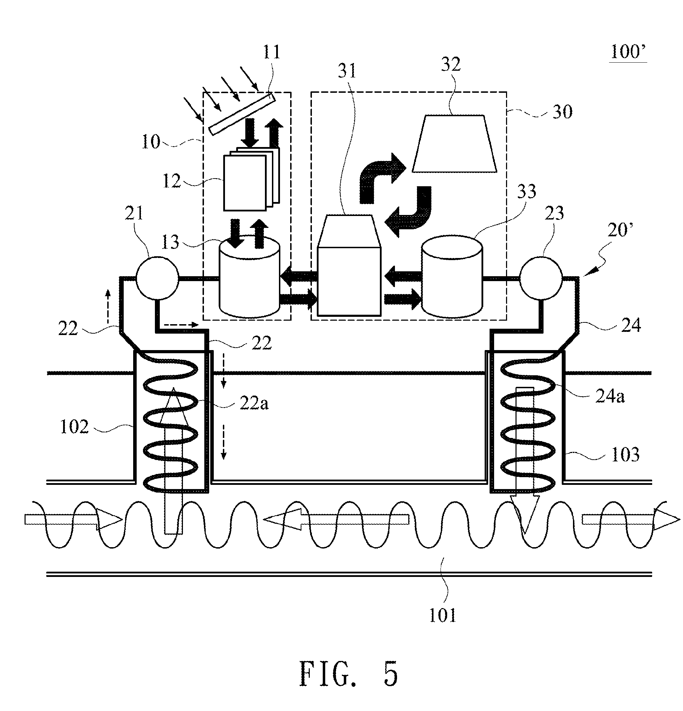

The ventilation system 100' for use in tunnel engineering operates in a most-power-saving mode in different scenarios by taking account of extrinsic conditions. As shown in Fig. 5, the dashed-line arrows indicate the directions in which the hot water in the heating spiral pipe 22a flows, and the white arrows indicate the directions in which gas flows. Given a low outdoor temperature, there is relatively less demand for dissipating the heat in a tunnel, and thus it is sufficient to heat up the air inside the first shaft 102 with the hot water produced by the heat collected by the heat collecting device 10 to thereby induce the chimney effect and speed up the expulsion of air. In so doing, ambient cool air is naturally introduced into the second shaft 103 to thereby maintain the temperature inside the tunnel 101 and maintain the efficiency of electric power transmission by the electric cables inside the tunnel 101. Also, the first shaft 102 is configured to discharge air and thus is also known as the air discharging shaft.

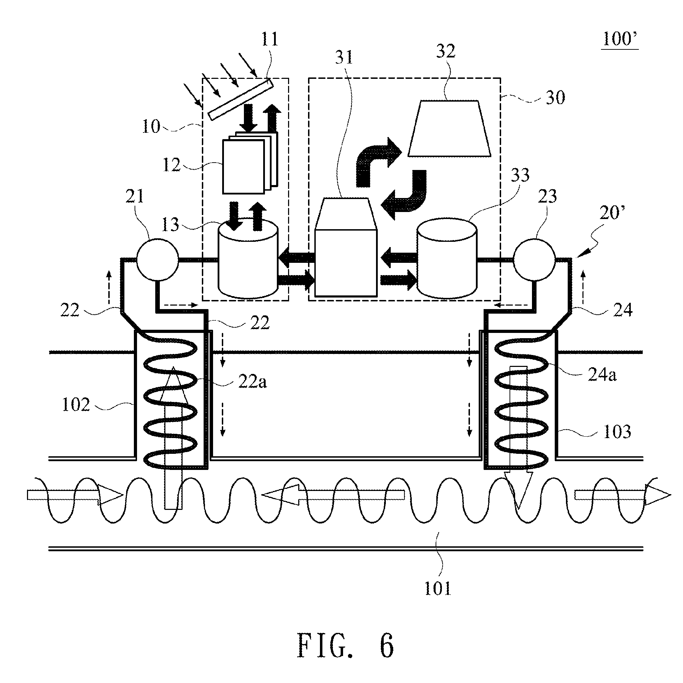

Referring to Fig. 6, the dashed-line arrows indicate the directions in which the hot water and the ice water in the heating spiral pipe 22a and the cooling spiral pipe 24a flow, respectively, and the white arrows indicate the directions in which gas flow. At a high ambient temperature, the heat collecting device 10 has sufficiently high conversion efficiency to drive the cooling device 30 to produce ice water. The ice water thus produced is introduced into the cooling spiral pipe 24a to lower the temperature of the air inside the second shaft 103 and thereby speed up natural convection. According to the principle "cold air always descends," ambient air enters the tunnel 101 via the second shaft 103 to form an incoming air current therein; hence, the second shaft 103 is also known as the air feeding shaft.

With ambient temperature rising, the hot water and the ice water in the spiral pipes 22a, 24a become hotter and colder respectively; as a result, the temperature of the air inside the first shaft 102 rises, and the temperature of the air inside the second shaft 103 drops. This not only speeds up and strengthens the chimney effect-induced convection, but also enhance ventilation inside the tunnel 101. Last but not least, renewal of air inside the tunnel 101 can be promoted by means of natural convection by heating up the first shaft 102 and cooling down the second shaft 103 concurrently.

In this embodiment, the ventilation system 100' equipped with a heat-driven cooler is advantageously characterized by low power consumption and low manufacturing costs and thus is fit for use in tunnel engineering that requires multi-point installation of the ventilation systems 100, 100' and joint use of a pipeline.

The foregoing embodiments are provided to illustrate and disclose the technical features of the present invention so as to enable persons skilled in the art to understand the disclosure of the present invention and implement the present invention accordingly, and are not intended to be restrictive of the scope of the present invention. Hence, all equivalent modifications and variations made to the foregoing embodiments without departing from the spirit embodied in the disclosure of the present invention should fall within the scope of the invention as set forth in the appended claims.

## Claims

1. A ventilation system (100) for use in tunnel engineering, applicable to a tunnel (101) having at least one first shaft (102) and at least one second shaft (103), the ventilation system (100) comprising:
a heat collecting device (10) for collecting heat; and
at least one piping system (20) each comprising:
a first pump (21) connected to the heat collecting device (10); and
a first pipeline (22) communicating with the first pump (21) to form a circuit, wherein a portion of the first pipeline (22) coils inside the first shaft (102) to form a heating spiral pipe (22a) inside the first shaft (102).

2. The ventilation system (100) of claim 1, wherein the heat collecting device (10) comprises:
a heat collector (11); and
a heat exchanger (12) connected between the heat collector (11) and the first pump (21).

3. The ventilation system (100) of claim 2, wherein the heat collecting device (10) further comprises a first storage tank (13) configured to function as a heat-storing device and connected between the heat exchanger (12) and the first pump (21).

4. The ventilation system (100) of claim 3, wherein the heat collected by the heat collector (11) is non-electric heat.

5. The ventilation system (100) of claim 4, wherein the non-electric heat is solar energy, geothermal energy, fuel gas energy, or waste heat.

6. A ventilation system (100') for use in tunnel engineering, applicable to a tunnel (101) having at least one first shaft (102) and at least one second shaft (103), the ventilation system (100') comprising:
a heat collecting device (10) for collecting heat;
a cooling device (30) for refrigeration comprising:
a cooler (31) connected to the heat collecting device (10); and
a cooling tower (32) connected to the cooler (31); and
at least one piping system (20') each comprising:
a first pump (21) connected to the heat collecting device (10);
a first pipeline (22) communicating with the first pump (21) to form a circuit,
wherein a portion of the first pipeline (22) coils inside the first shaft (102) to form a heating spiral pipe (22a) inside the first shaft (102);
a second pump (23) connected to the cooler (31); and
a second pipeline (24) communicating with the second pump (23) to form a circuit, wherein a portion of the second pipeline (24) coils inside the second shaft (103) to form a cooling spiral pipe (24a) inside the second shaft (103).

7. The ventilation system (100') of claim 6, wherein the heat collecting device (10) comprises:
a heat collector (11); and
a heat exchanger (12) connected between the heat collector (11) and the first pump (21).

8. The ventilation system (100') of claim 7, wherein the heat collecting device (10) further comprises a first storage tank (13) configured to function as a heat-storing device and connected between the heat exchanger (12), the cooler (31), and the first pump (21).

9. The ventilation system (100') of claim 8, wherein the cooling device (30) further comprises a second storage tank (33) configured to function as a cold air-storing device and connected between the cooler (31) and the second pump (23).

10. The ventilation system (100') of claim 9, wherein the cooler (31) is a heat-driven cooler.

11. The ventilation system (100') of claim 10, wherein the cooler (31) is an adsorption type cooler or an absorption type cooler.

12. The ventilation system (100') of claim 7, wherein the heat collected by the heat collector (11) is non-electric heat.

13. The ventilation system (100') of claim 12, wherein the non-electric heat is solar energy, geothermal energy, fuel gas energy, or waste heat.
